# EUROPEAN PATENT APPLICATION

(11) **EP 2 123 966 A2**
(43) Date of publication of application: **25.11.2009**
(21) Application number: 09251361.3
(22) Date of filing: 20.05.2009
(51) Int. Cl.: F16M 11/10, F16M 11/18

(54) **Display**

(30) Priority: 21.05.2008 JP 2008132874
(71) Applicant: Funai Electric Co., Ltd., Osaka 574-0013 (JP)
(72) Inventor: Shimizu, Daisuke, Daito-shi Osaka 574-0013 (JP)
(74) Representative: Calderbank, Thomas Roger

(57) **Abstract**

A display (100) includes a display screen portion (10), a display screen support member (81) supporting the display screen portion to be rotatable in an anteroposterior direction with respect to a vertical plane (300) and a driving source (50) rotating the display screen support member in the anteroposterior direction by a prescribed angle with respect to the vertical plane, wherein a center of gravity of the display screen portion is located on either a frontward side or a rearward side with respect to the vertical plane in both of a state where the driving source rotates the display screen support member on the frontward side with respect to the vertical plane and a state where the driving source rotates the display screen support member on the rearward side with respect to the vertical plane.

## Description

The present invention relates to a display, and more particularly, it relates to a display each comprising a display screen support member supporting a display screen portion to be rotatable in an anteroposterior direction with respect to a vertical plane.

A display comprising a display screen support member supporting a display screen portion of a liquid crystal television or the like to be rotatable in an anteroposterior direction with respect to a vertical plane is known in general, as disclosed in Japanese Patent Laying Open No. 2004-312188, for example.

The aforementioned Japanese Patent Laying Open No. 2004-312188 discloses a flat panel display comprising a support post extending substantially vertically from a stand base and a display body rotatably connected to a support post coupling portion provided on a first end of the support post through a rotation support portion. In this flat panel display described Japanese Patent Laying Open No. 2004-312188, the support post coupling portion and the rotation support portion provided on a back surface of the display body are connected to each other through a rotating shaft arranged coaxially with a coiled actuating force assist spring. The actuating force assist spring has the first end fixed to the support post coupling portion and a second end fixed to the rotation support portion of the display body. Therefore, the actuating force assist spring reduces resistance in rotation caused by movement of a center of gravity of the display body through own elastic force, also when the center of gravity of the display body anteroposteriorly moves above the rotating shaft in anteroposterior rotation of the display body by a user. Thus, the user can incline the display body in the anteroposterior direction while reducing the resistance in rotation caused by movement of the center of gravity of the display body.

In the aforementioned conventional flat panel display disclosed in Japanese Patent Laying Open No. 2004-312188, however, a state of switching a position of the center of gravity of the display body from a side of the front surface to a side of the back surface or from the side of the back surface to the side of the front surface conceivably exists immediately before and after crossing the load (center of gravity) of the display body above the rotating shaft, since the load (center of gravity) of the display body moves while crossing between the side of the front surface and the side of the back surface of the display body above the rotating shaft when the user rotates the display body in the anteroposterior direction. In a case where the structure of the aforementioned flat panel display disclosed in Japanese Patent Laying Open No. 2004-312188 is applied to a display comprising a turning mechanism rotating a display body in an anteroposterior direction through a driving source (electric motor) and a plurality of gear members, when passing through the position where the position of the center of gravity of the display body is switched between the side of the front surface and the side of the back surface of the display body, a direction of a load resulting from the load of the display screen portion applied to meshing portions of the plurality of gear members is also switched. When the direction of the load is thus switched, the display screen portion disadvantageously jolts due to backlash (clearances provided between the gears meshing with each other) interposed between the plurality of the gear members during rotation.

The present invention has been proposed in the light of the aforementioned problems, and a preferred aim of the present invention is to provide a display capable of suppressing jolting of a display screen portion during rotation.

A display according to an aspect of the present invention comprises a display screen portion, a display screen support member supporting the display screen portion to be rotatable in an anteroposterior direction with respect to a vertical plane and a driving source rotating the display screen support member in the anteroposterior direction by a prescribed angle with respect to the vertical plane, wherein a center of gravity of the display screen portion is located on either a frontward side or a rearward side with respect to the vertical plane in both of a state where the driving source rotates the display screen support member on the frontward side with respect to the vertical plane and a state where the driving source rotates the display screen support member on the rearward side with respect to the vertical plane.

In this display according to the aspect of the present invention, as hereinabove described, the center of gravity of the display screen portion is located on either the frontward side or the rearward side with respect to the vertical plane in both of the state where the driving source rotates the display screen support member on the frontward side with respect to the vertical plane and the state where the driving source rotates the display screen support member on the rearward side with respect to the vertical plane, whereby the center of gravity of the display screen portion always exists on either the frontward side or the rearward side with respect to the vertical plane dissimilarly to a case where the center of gravity of the display screen portion moves between the frontward side and the rearward side holding the vertical plane passing through the rotation center therebetween following rotation of the display screen portion. Therefore, when display screen portion is anteroposteriorly rotated through the driving source (electric motor or the like), the plurality of gear members and the like, for example, the load caused by the load of the display screen portion applied to the meshing portion of the plurality of gear members is always applied in the same direction in response to the rotational direction of the display screen portion. In other words, the plurality of gear members are driven while the tooth flanks meshing with each other in the rotational direction are always in contact with each other, and hence power can continuously transmit from the driving gear to the driven gear in the overall rotational area of the display screen portion. Consequently, the display body can be inhibited from jolting during rotation even when the display screen portion is anteroposteriorly rotated through the driving source, the plurality of gear members and the like.

In the aforementioned display according to the aspect, the center of gravity of the display screen portion is preferably located on either the frontward side or the rearward side with respect to said vertical plane without crossing a vertical plane passing through a rotation center axis of the display screen support member when the driving source rotates the display screen support member on the frontward side with respect to the vertical plane from a state of rotating the display screen support member on the rearward side with respect to the vertical plane. According to this structure, the center of gravity of the display screen portion can easily reliably exists on either the frontward side or the rearward side with respect to the vertical plane.

The aforementioned display according to the aspect preferably further comprises a plurality of gear members, wherein the center of gravity of the display screen portion is located on either the frontward side or the rearward side with respect to the vertical plane in both of the state where the driving source rotates the display screen support member on the frontward side with respect to the vertical plane and the state where the driving source rotates the display screen support member on the rearward side with respect to the vertical plane, so that the same directional load caused by a load of the display screen portion acts on a meshing portion of the plurality of gear members. According to this structure, the plurality of gear members are driven while the tooth flanks meshing with each other in the rotational direction are in contact with each other, and hence jolting can be easily suppressed. The plurality of gear members are in a state where the tooth flanks meshing with each other in the rotational direction are always in contact with each other, even when the display screen portion stands still while being inclined with respect to the vertical plane, and hence the display screen portion can stably maintain the attitude inclined on the frontward side or the rearward side without jolting.

In the aforementioned structure further comprising the plurality of gear members, the plurality of gear members preferably include a first gear provided on the display screen support member and rotatable in the anteroposterior direction and a second gear meshing with the first gear and reciprocative in a horizontal plane by normal or reverse rotation of the driving source, and the same directional load caused by the load of the display screen portion preferably acts on a meshing portion of the first gear and the second gear in both of the state where the driving source rotates the display screen support member on the frontward side with respect to the vertical plane and the state where the driving source rotates the display screen support member on the rearward side with respect to the vertical plane. According to this structure, the tooth flanks are always in contact with each other on the meshing portion of the first gear provided on the display screen support member and the second gear meshing with the first gear in the plurality of gear members, and hence the display screen portion can be further reliably rotated on the frontward side or the rearward side without jolting.

In aforementioned structure in which the plurality of gear members include the first gear and the second gear, a distance from the meshing portion of the first gear and the second gear to a rotation center axis of the display screen support member is preferably rendered smaller than a distance from the center of gravity of the display screen portion to the rotation center axis of the display screen support member. According to this structure, the quantity of movement of the center of gravity of the display screen portion (movement range in the anteroposterior direction) following rotation of the display screen support member can be rendered smaller than the quantity of movement of the first gear and the second gear (movement range in the anteroposterior direction), and hence the larger quantity of movement (quantity of rotation) on the display screen support member side can be ensured by the smaller quantity of movement (quantity of rotation) on the gear member side.

In aforementioned structure in which the plurality of gear members include the first gear and the second gear, the display screen support member is preferably formed to be rotatable in the horizontal plane, and the second gear is preferably formed to be rotated in the horizontal plane through the first gear following rotation of the display screen support member in the horizontal plane. According to this structure, the second gear is rotated following rotation of the first gear in the horizontal plane, and hence the display screen portion can be easily rotated in the anteroposterior direction with respect to the vertical plane also when the display screen portion is rotated in the horizontal plane.

In this case, the first gear is preferably fixed to the vicinity of a rotation center of the display screen support member in the horizontal plane, and the second gear preferably meshes with the first gear in the vicinity of the rotation center of the display screen support member in the horizontal plane. According to this structure, the first gear and the second gear always mesh with each other in the vicinity of the rotation center, and hence the meshing state of the first gear and the second gear can be easily maintained also when the display screen portion rotates in the horizontal plane.

In aforementioned structure in which the plurality of gear members include the first gear and the second gear, the first gear is preferably convexed toward the second gear and has tooth tips formed to have an arcuate shape as viewed from a side portion, while the second gear is preferably a rack gear in the form of a planar surface, having a plurality of teeth. According to this structure, tips of the second gear linearly move in the horizontal plane following reciprocation of the second gear in the horizontal plane. Thus, the first gear meshing with the second gear and having arcuate tips is rotated following the linear movement of the second gear, and hence the display screen support member provided on the first gear can be easily rotated in the anteroposterior direction with respect to the vertical plane.

In the aforementioned display according to the aspect, a rearward rotation angle of the display screen support member with respect to the vertical plane is preferably larger than a frontward rotation angle of the display screen support member with respect to the vertical plane, and the center of gravity of the display screen portion is preferably located on the rearward side with respect to the vertical plane in both of the state where the driving source rotates the display screen support member on the frontward side with respect to the vertical plane and the state where the driving source rotates the display screen support member on the rearward side with respect to the vertical plane. According to this structure, the movement range of the center of gravity of the display screen portion always exists on the rearward side where the rotation angle (rotational range) of the display screen portion is larger, and hence the display screen portion can be smoothly rotated without jolting also when the display screen portion is rotated on the frontward side over the vertical plane in addition to the overall area of the rearward side where the display screen portion rotates. Consequently, the rotation angle of the display screen portion can be precisely adjusted.

The aforementioned display according to the aspect preferably further comprises a platelike support shaft, wherein the display screen support member preferably includes a rotating portion provided with a sectorial hole portion receiving the platelike support shaft, and the display screen support member is preferably rotated around a base portion of the sectorial hole portion receiving the platelike support shaft in the anteroposterior direction by a prescribed angle with respect to the vertical plane. According to this structure, the movement range of the platelike support shaft relative to the display screen support member is determined by the (sectorial) shapes of the hole portion, and hence the rotational range of the display screen support member in the anteroposterior direction with respect to the vertical plane can be easily determined.

In the aforementioned structure further comprising the support shaft, an end surface in a direction perpendicular to a thickness direction of the platelike support shaft preferably comes into contact with a base portion of the hole portion of the display screen support member, so that the display screen support member is rotated around the end surface of the platelike support shaft in the anteroposterior direction by the prescribed angle with respect to the vertical plane. According to this structure, the load of the display screen portion can be received by the end surface in the direction, where intensity is larger, perpendicular to the thickness direction of the support shaft, and hence the support shaft can be inhibited from deformation due to the load of the display screen portion.

In the aforementioned structure in which the end surface of the support shaft comes into contact with the base portion of the hole portion, the center of gravity of the display screen portion is preferably located on either the frontward side or the rearward side with respect to a vertical plane passing through the end surface of the platelike support shaft in both of the state where the driving source rotates the display screen support member on the frontward side with respect to the vertical plane and the state where the driving source rotates the display screen support member on the rearward side with respect to the vertical plane. According to this structure, the center of gravity of the display screen portion easily exists either on the frontward side or the rearward side with respect to the vertical plane passing through the rotation center of the display screen support member.

In the aforementioned structure in which the end surface of the support shaft comes into contact with the base portion of the hole portion, a thickness of the platelike support shaft and a width of the base portion of the sectorial hole portion in the thickness direction of the support shaft are preferably equal to each other. According to this structure, the display screen support member and the support shaft can inhibit the end surface of the support shaft from deviating from the base portion of the hole portion of the display screen support member serving as the rotation center when the display screen support member is rotated. Therefore, the display screen portion can be smoothly rotated.

In the aforementioned structure further comprising the support shaft, the display preferably further comprises a vertical support member provided with the platelike support shaft, wherein the vertical support member is made of sheet metal, and the platelike support shaft is integrally formed with the vertical support member by partially uprighting the vertical support member. According to this structure, the support shaft can be easily formed at the same time when the vertical support member is formed by metal press working.

In the aforementioned structure further comprising the support shaft, the display preferably further comprises a plurality of gear members including a first gear provided on the display screen support member and rotatable in the anteroposterior direction and a second gear meshing with the first gear and reciprocative in a horizontal plane by normal or reverse rotation of the driving source and a vertical support member provided with a platelike support shaft, wherein a pair of the vertical support members are provided on both sides of the first gear and the second gear in the horizontal plane. According to this structure, the load of the display screen portion can be supported by the pair of support shafts provided on the both sides of the first gear and the second gear in the horizontal plane, and hence excessive application of the load caused by the load of the display screen portion to the meshing portion of the first gear and the second gear can be suppressed.

The foregoing and other objects, features, aspects and advantages of the present invention will become more apparent from the following detailed description of the present invention when taken in conjunction with the accompanying drawings.

### IN THE DRAWINGS

Fig. 1 is a perspective view showing an overall structure of a liquid crystal television according to an embodiment of the present invention;
Fig. 2 is an exploded perspective view of the liquid crystal television according to the embodiment shown in Fig. 1;
Fig. 3 is a plan view showing the detailed structure of a display screen turning apparatus constituting the liquid crystal television according to the embodiment shown in Fig. 1;
Fig. 4 is a sectional view for illustrating the detailed structure of the display screen turning apparatus constituting the liquid crystal television according to the embodiment shown in Fig. 1;
Fig. 5 is an exploded perspective view for illustrating the detailed structure of the display screen turning apparatus constituting the liquid crystal television according to the embodiment shown in Fig. 1;
Figs 6 and 7 are sectional views for illustrating the detailed structure of the display screen turning apparatus constituting the liquid crystal television according to the embodiment shown in Fig. 1;
Fig. 8 is an exploded perspective view showing the detailed structure of a display screen support mechanism and a turntable constituting the liquid crystal television according to the embodiment of the present invention;
Fig. 9 is a side elevational view of a display screen support member shown in Fig. 8, as viewed along arrow Y2;
Fig. 10 is a front elevational view of a vertical support member shown in Fig. 8, as viewed along arrow Y2;
Fig. 11 is a side elevational view of the vertical support member shown in Fig. 10, as viewed along arrow X1;
Fig. 12 is a side elevational view of the vertical support member shown in Fig. 10, as viewed along arrow X2; and
Fig. 13 is a diagram for illustrating a horizontal turning operation of the liquid crystal television according to the embodiment of the present invention shown in Fig. 1.

An embodiment of the present invention will be hereinafter described with reference to the drawings.

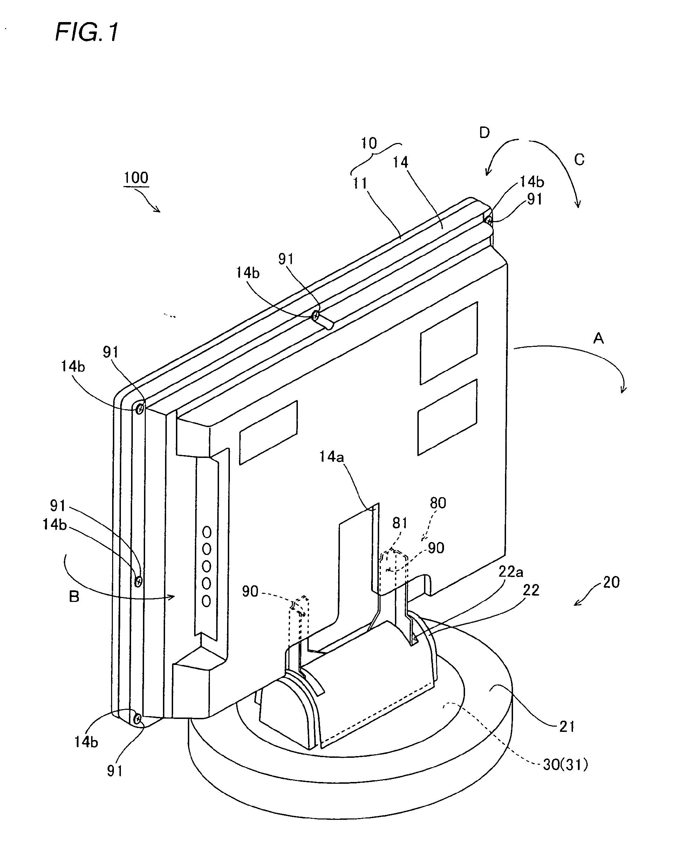

A structure of a liquid crystal television 100 according to an embodiment of the present invention will be now described with reference to Figs. 1 to 12. This embodiment of the present invention is applied to the liquid crystal television 100 employed as a display.

As shown in Fig. 1, the liquid crystal television 100 according to the embodiment of the present invention comprises a display body 10 and a display screen turning apparatus 20 enabling the display body 10 to turn in a horizontal direction (along arrow A or B) by a prescribed angle in a horizontal plane and to rotate in an anteroposterior direction (along arrow C or D) with respect to a vertical plane by a prescribed angle. The display body 10 is an example of the "display screen portion" in the present invention.

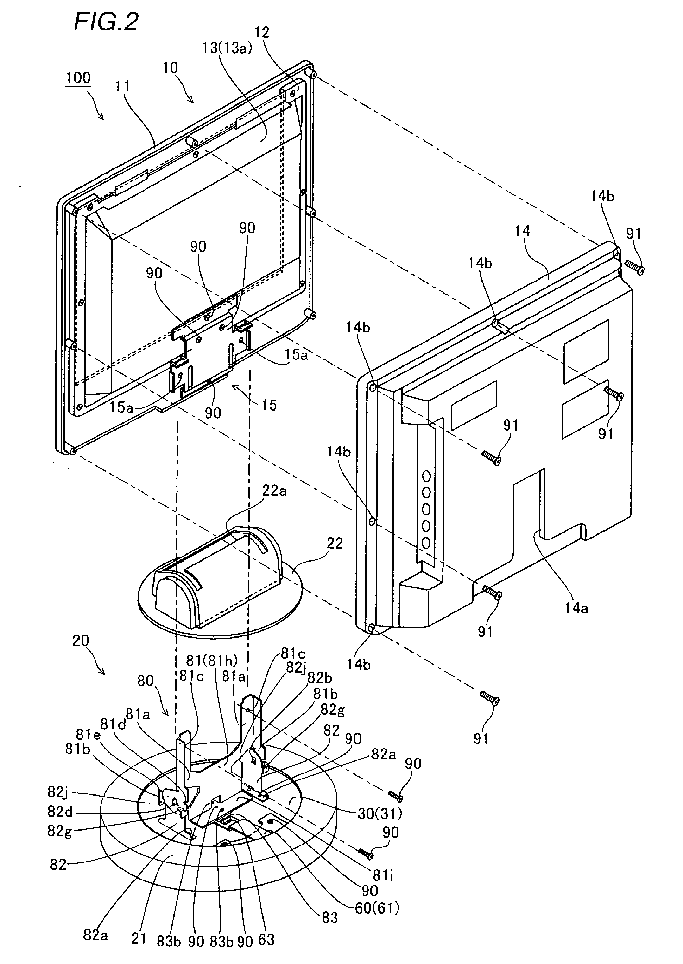

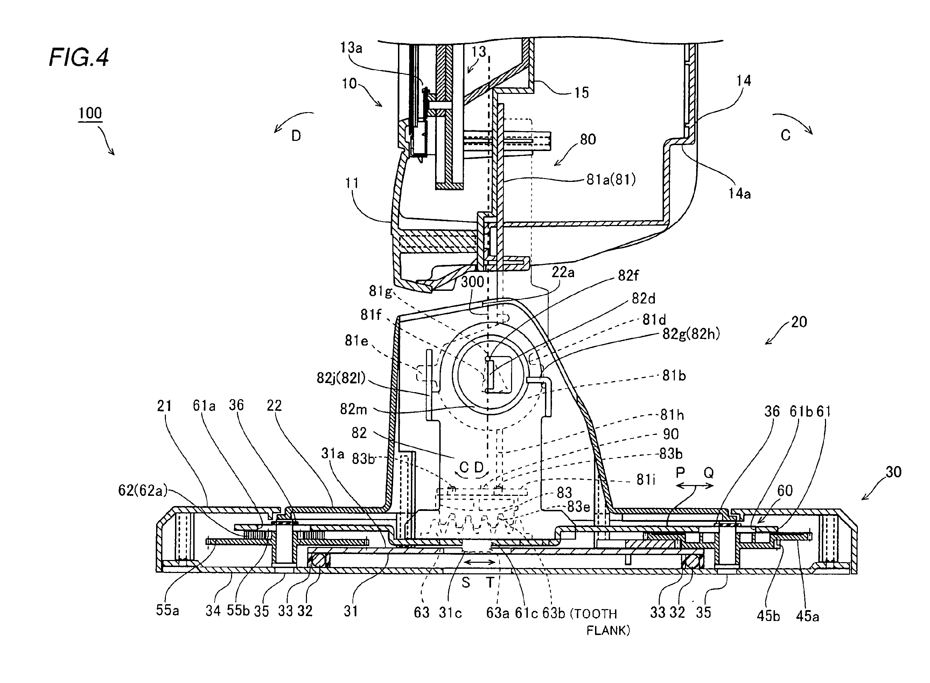

As shown in Fig. 2, the display body 10 is constituted by a front cabinet 11 made of resin, a liquid crystal module 13 storing a liquid crystal panel 13a (see Fig. 4) in a chassis 12 made of metal, and a rear cabinet 14 made of resin. A bracket member 15 made of sheet metal is provided on an inner lower portion of the display body 10 with screws 90 (four) to extend over the liquid crystal module 13 and the front cabinet 11. Thus, the display body 10 is fixed to the display screen support member 81 by tightening screws 90 into screw mounting holes 15a (two portions) of the bracket member 15 through screw receiving holes 81c of the display screen support member 81 (described later in detail) constituting the display screen turning apparatus 20, as shown in Fig. 2.

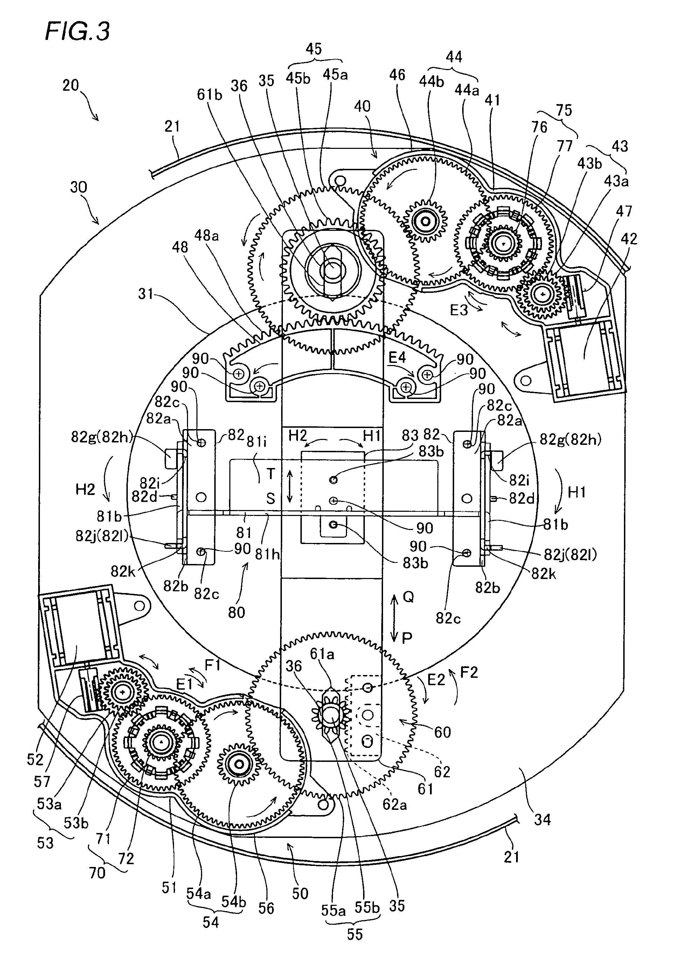

As shown in Fig. 3, the display screen turning apparatus 20 includes a display screen support mechanism 80 supporting the display body 10 (see Fig. 1), a base portion 30 having a function of turning the display body 10 in the horizontal direction (along arrow A or B in Fig. 1) and rotating the same in the anteroposterior direction (along arrow C or D in Fig. 1). The base portion 30 is constituted by a horizontal turning/driving portion 40 horizontally turning a turntable 31 arranged on the base portion 30 for adjusting a direction of display body 10 and a vertical turning/driving portion 50 rotating the display body 10 (see Fig. 1) in the anteroposterior direction with respect to the vertical plane by the prescribed angle for adjusting inclination of the display body 10.

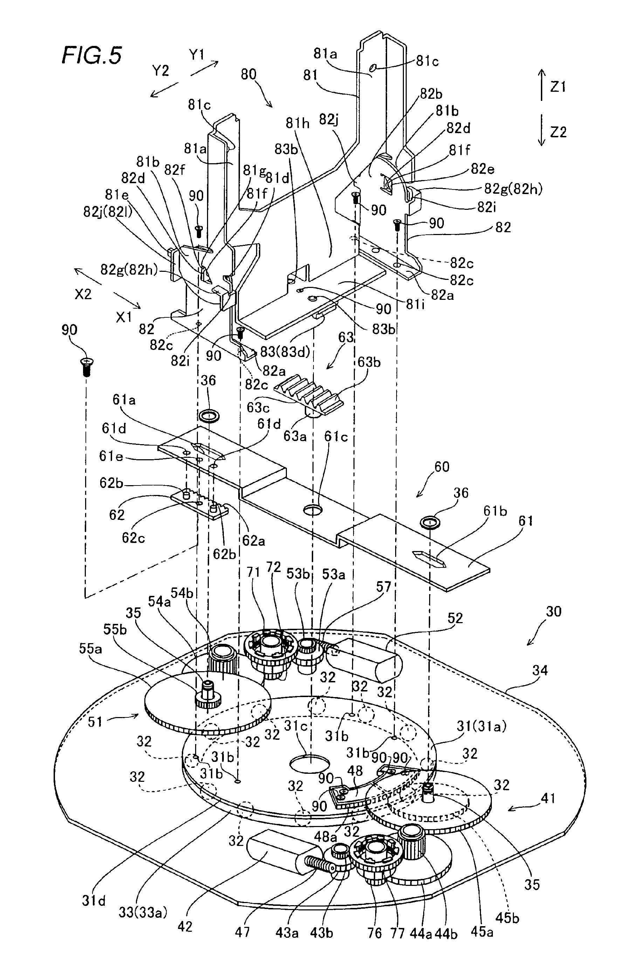

The display screen support mechanism 80 includes the display screen support member 81 made of sheet metal, a pair of vertical support members 82 made of sheet metal and a rotating gear 83 made of resin so arranged as to mesh with a rack gear 63 (see Fig. 4) provided on a rack plate 60, described later, as shown in Figs. 4 and 5. The rack gear 63 is an example of the "gear member" or the "second gear" in the present invention, and the rotating gear 83 is an example of the "gear member" or the "first gear" in the present invention. The display screen support member 81 is mounted on the pair of vertical support members 82 to be rotatable in the anteroposterior direction (along arrow C or D in Fig. 1) when torque exceeding a prescribed level is applied through the rack plate 60.

According to this embodiment, the rotating gear 83 is fixed to the vicinity of a rotation center of the display screen support member 81 in the horizontal plane and the rack gear 63 is formed to mesh with the rotating gear 83 in the vicinity of the rotation center of the display screen support member 81 in the horizontal plane. Thus, a meshing state of the rotating gear 83 and the rack gear 63 is maintained also when the display body 10 rotates in the horizontal plane.

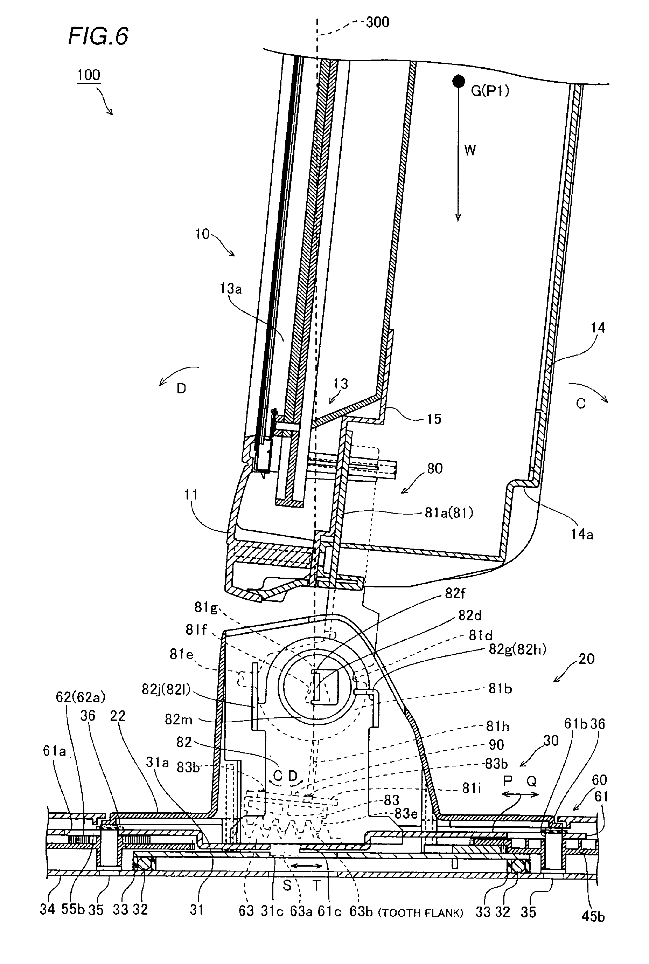

According to this embodiment, the display body 10 fixed to the display screen support member 81 is rotated rearward (along arrow C) from a vertical plane 300 (two-dot chain line) in the range of about 10° through the rotating gear 83 (broken line) meshing with the rack gear 63 (broken line) moving integrally with the rack plate 60 as shown in Fig. 4, when the rack plate 60 is moved along arrow P by the vertical turning/driving portion 50 as shown in Fig. 3. At this time, the liquid crystal television 100 is so formed that the center of gravity G of the display body 10 is located on a rearward side (along arrow C) with respect to the vertical plane 300 (two-dot chain line) regardless of the rearward rotation angle of the display body 10 (along arrow C), as shown in Fig. 6. Therefore, the same directional load (substantially along arrow S) caused by a load W of the display body acts on a meshing portion of the rack gear 63 and the rotating gear 83 (portion where a tooth flank 63b and a tooth flank 83e come into contact with each other). Thus, the rotating gear 83 rotates along arrow C while maintaining a state where a side of the tooth flank 83e, to which the load caused by the load W of the display body 10 is applied meshes with the tooth flank 63b of the rack gear 63 without a clearance. The vertical turning/driving portion 50 is an example of the "driving source" in the present invention.

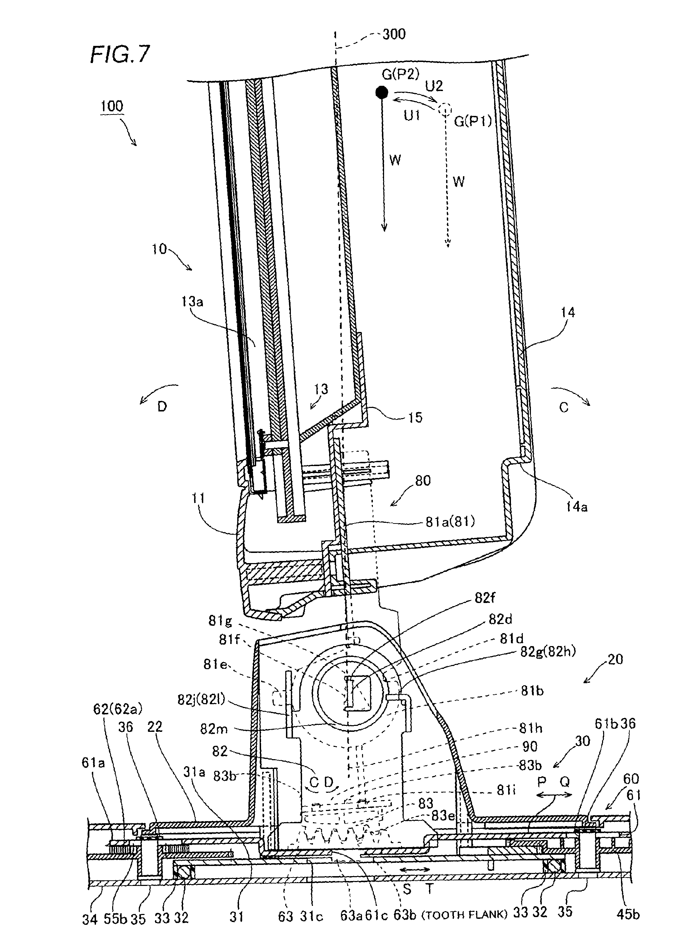

According to this embodiment, the display body 10 is rotated frontward (along arrow D) from the vertical plane in the range of about 2.5° through the rotating gear 83 (shown by the broken line) meshing with the rack gear 63 (broken line) moving integrally with the rack plate 60 as shown in Fig. 4, when the rack plate 60 is moved along arrow Q by the vertical turning/driving portion 50 as shown in Fig. 3. At this time, the liquid crystal television 100 is so formed that the center of gravity G of the display body 10 is located on the rearward side (along arrow C) with respect to the vertical plane 300 (two-dot chain line) regardless of the frontward rotation angle of the display body 10 (along arrow D), as shown in Fig. 7. Also in this case, therefore, the same directional load in (substantially along arrow T) caused by the load W of the display body 10 acts on the meshing portion of the rack gear 63 and the rotating gear 83 (portion where the tooth flank 63b and the tooth flank 83e come into contact with each other). Also in this case, the rotating gear 83 rotates along arrow D while maintaining the state where the side of the tooth flank 83e, to which the load caused by the load W of the display body 10 is applied meshes with the tooth flank 63b of the rack gear 63 without a clearance.

According to this embodiment, also when the display body 10 is continuously rotated along arrow D from a state shown in Fig. 6 (state inclined along arrow C) to a state shown in Fig. 7 (state inclined along arrow D), the center of gravity G of the display body 10 always moves in a prescribed range of the rearward side (along arrow C) with respect to vertical plane 300. In other words, the center of gravity G of the display body 10 moves along arrow U1 from a position P1 (broken line) to a position P2 (black circle) without crossing the vertical plane 300 passing through the rotation center of the display screen support member 81 along arrow D, as shown in Fig. 7. Thus, the center of gravity G is always located on the rearward side (along arrow C) with respect to the vertical plane 300 even during the display body 10 rotates. In Fig. 7, the position P1 (broken line) shows the position of the center of gravity G in the state of the display body 10 shown in Fig. 6.

According to this embodiment, also when the display body 10 is continuously rotated along arrow C from the state shown in Fig. 7 (state inclined along arrow D) to the state shown in Fig. 6 (state inclined along arrow C), the center of gravity G of the display body 10 always moves in a prescribed range of the rearward side (along arrow C) with respect to the vertical plane 300. In other words, the center of gravity G of the display body 10 moves along arrow U2 from the position P2 (black circle) to the position P1 (broken line) without crossing the vertical plane 300 passing through the rotation center of the display screen support member 81 along arrow C, as shown in Fig. 7.

According to this embodiment, a distance from the meshing portion of the rotating gear 83 and the rack gear 63 to a rotation center axis of the display screen support member 81 is smaller than a distance from the center of gravity G of the display body 10 to the rotation center axis of the display screen support member 81. Thus, the quantity of movement of the center of gravity G of the display body 10 (movement range of the center of gravity G from the position P1 to the position P2 in Fig. 7) following rotation of the display screen support member 81 is rendered smaller than the quantity of movement (movement range along arrows S and T in Fig. 7) of the rotating gear 83 and the rack gear 63.

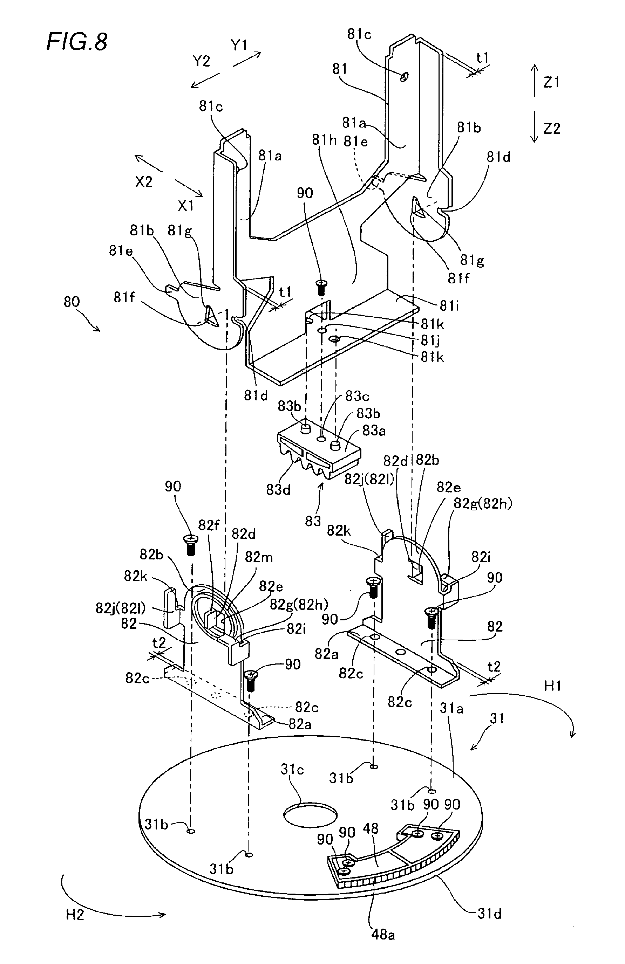

The display screen support member 81 integrally has a pair of display body mounting portions 81a extending upward (along arrow Z1) and rotating portions 81b provided on side surfaces of the display screen support member 81 along arrows Y1 and Y2 respectively, as shown in Fig. 8. The pair of display body mounting portions 81a are formed with the screw receiving holes 81c respectively.

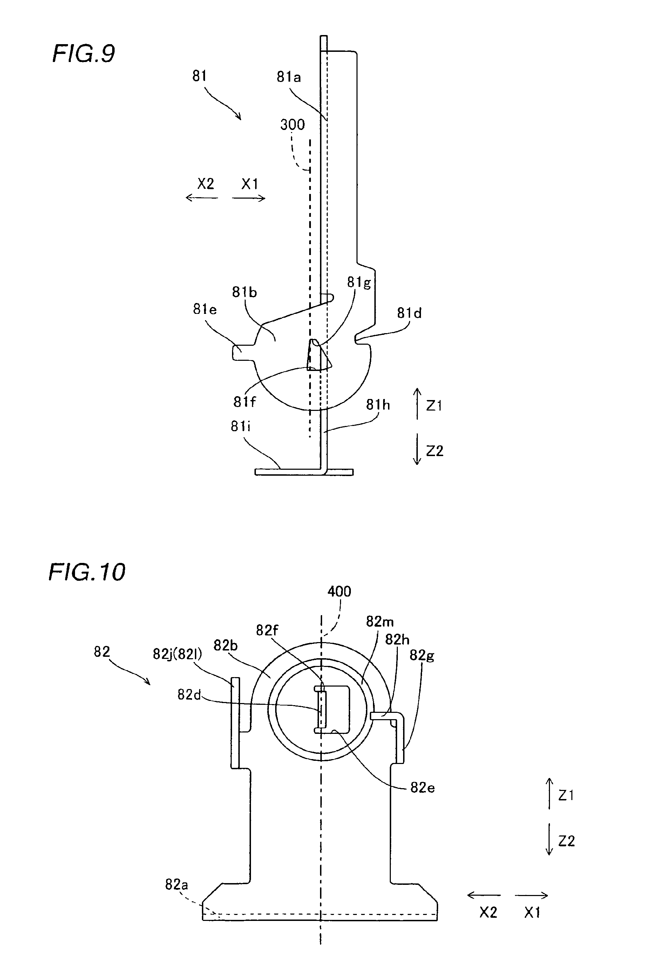

The pair of rotating portions 81b of the display screen support member 81 are provided to extend from both end portions of the display body mounting portions 81a in a direction (along arrows X1 and X2) perpendicular to the display body mounting portions 81a respectively. The rotational portions 81b have a thickness t1 (see Fig. 8) along arrow Y1. Further, notched portions 81d concaved along arrow X2 are provided on the pair of rotational portions 81b along arrow X1 respectively, as shown in Fig. 9. In addition, protrusions 81e convexed along arrow X2 are formed on the pair of rotational portions 81b along arrow X2 respectively.

As shown in Figs. 8 and 9, sectorial hole portions 81f are formed on the pair of rotating portions 81b to be located in the vicinity of rotation central portions of the rotating portions 81b. The hole portions 81f are formed to receive support shafts 82d (see Fig. 8) of the vertical support members 82 described later. The hole portions 81f are so arranged that base portions 81g on the sides of circle centers of sectorial shapes are positioned upward (along arrow Z1), while the base portions 81g come into contact with upper surfaces 82f (see Fig. 4), described later, of the support shafts 82d, as shown in Fig. 9. Thus, the upper surfaces 82f of the support shafts 82d support the load W (see Fig. 6) of the display body 10 (see Fig. 2) through the base portions 81g of the hole portions 81f as shown in Fig. 4. The display screen support member 81 is formed to be rotatable around the base portions 81g of the sectorial holes 81f supported by the platelike support shafts 82d in a sectorial angular range with respect to the support shafts 82d. According to this embodiment, the display screen support member 81 is formed to rotate in the range of about 10° along arrow C (rearward) and about 2.5° along arrow D (frontward) with respect to the vertical plane 300 (two-dot chain line), as shown in Fig. 4. The upper surfaces 82f are examples of the "end surface" in the present invention.

As shown in Figs. 8 and 9, a body portion 81h extending downward (along arrow Z2) from the display body mounting portions 81a is integrally formed on the display screen support member 81. As shown in Fig. 9, the display body mounting portions 81a and the body portion 81h are substantially flush with each other and on a position deviating by a prescribed distance along arrow X1 with respect to the vertical plane 300 (two-dot chain line) passing through the base portions 81g.

A lower surface portion 81i extending in the direction (along arrows X1 and X2) perpendicular to the body portion 81h is formed on a lower end of the body portion 81h. A screw receiving hole 81j receiving a screw 90 for fixing the rotating gear 83 to the display screen support member 81 is formed at a substantial center of the lower surface portion 81i as shown in Fig. 8. A pair of boss receiving holes 81k are formed to hold the screw receiving hole 81j therebetween. A pair of bosses 83b, described later, of the rotating gear 83 are inserted into the pair of boss receiving holes 81k respectively.

The pair of vertical support members 82 are fixed on an upper surface of the turntable 31 in a state where the support shafts 82d are inserted into the hole portions 81f of the display screen support member 81 outward from the inner side of the display screen support member 81 respectively, as shown in Fig. 5. The pair of vertical support members 82 are mirror-symmetrical to each other, as shown in Fig. 8. Therefore, a structure of the vertical support members 82 mounted on the rotational portions 81b (front side in Fig. 5) of the display screen support member 81 provided along arrow Y2 will be hereinafter described.

Each of the vertical support members 82 integrally has a turntable mounting portion 82a and the corresponding rotational portion mounting portion 82b, as shown in Figs. 8 and 10. As shown in Fig. 8, the turntable mounting portion 82a is formed with screw mounting holes 82c (two portions) for fixing the vertical support member 82 to the turntable 31. The rotational portion mounting portion 82b is so formed as to extend upward (along arrow Z1) with respect to the turntable mounting portion 82a from an end of the turntable mounting portion 82a on a side along arrow Y2. The rotational portion mounting portion 82b has a thickness t2 (see Fig. 8) along arrow Y1.

As shown in Fig. 10, an upper portion of the rotational portion mounting portion 82b is semicircular. In the vicinity of the center of the semicircular upper portion of the rotational portion mounting portion 82b, the support shaft 82d is so formed as to be arranged on a centerline 400 (one-dot chain line) vertically extending (along arrows Z1 and Z2) by partially uprighting a sheet metal member. This support shaft 82d is provided to extend along arrow Y2, and in the form of a flat plate elongated in the vertical direction, as shown in Fig. 8. A hole portion 82e (see Fig. 10) is formed on an upright portion of the support shaft 82d. Thus, the display screen support member 81 is rotated around the support shafts 82d serving as rotating shafts in the anteroposterior direction (along arrow C or D in Fig. 1) with respect to the pair of vertical support members 82, while the support shafts 82d are inserted into the hole portions 81f of the display screen support member 81, as shown in Fig. 4. At this time, the upper surfaces 82f in a direction perpendicular to a thickness direction of the support shafts 82d come into contact with the base portions 81g of the hole portions 81f of the display screen support member 81, so that the display screen support member 81 is rotated around the upper surfaces 82f of the support shafts 82d. The thickness of the support shafts 82d and the width in the thickness direction of the support shafts of the base portions 81g of the hole portions 81f are substantially equal to each other. Thus, the display screen support member 81 and the support shafts 82d are formed so as not to deviate from the base portions 81g of the hole portions 81f of the display screen support member 81 when the display screen support member 81 rotates.

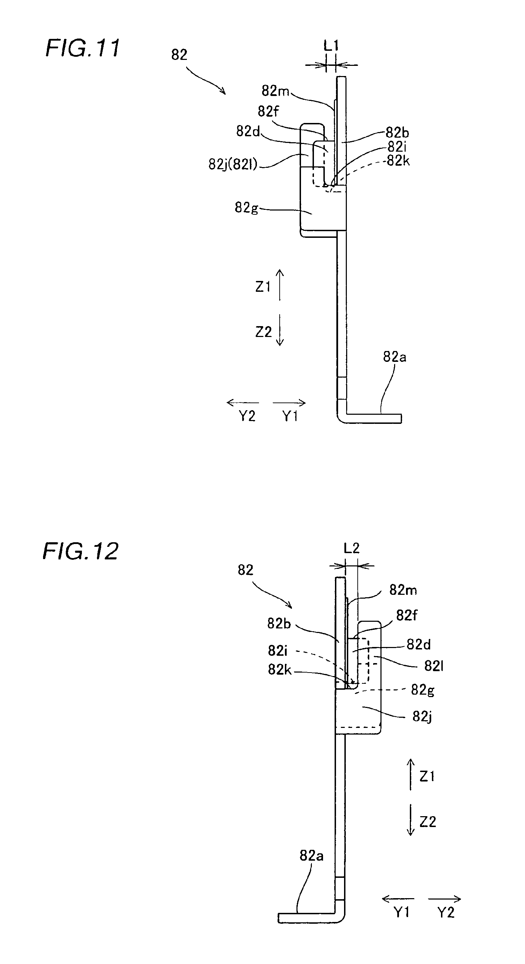

As shown in Fig. 10, a hook portion 82g is formed on a side surface of each rotational portion mounting portion 82b along arrow X1 by bending a sheet metal member. More specifically, the hook portion 82g is formed to extend along arrow Y2, which is the same direction as the support shafts 82d, from the side surface (see Fig. 10) of the rotational portion mounting portion 82b along arrow X1, as shown in Fig. 11. An interval L1 between a stop portion of the hook portion 82g and the rotational portion mounting portion 82b is slightly larger than the thickness t1 of the rotational portion 81b of the display screen support member 81. Further, the hook portion 82g is provided with the stop portion 82h extending upward (along arrow Z1) and thereafter extending along arrow X2, as shown in Fig. 10. Thus, a clearance 82i is formed between the hook portion 82g and the rotational portion mounting portion 82b, as shown in Fig. 11. As shown in Fig. 5, the vertical support member 82 is rotated with respect to the display screen support member 81 while an outer peripheral portion of the rotational portion 81b of the display screen support member 81 is inserted into the clearance 82i (see Fig. 11) formed between the hook portion 82g and the rotational portion mounting portion 82b. The hook portion 82g inhibits the support shaft 82d from coming off the hole portion 81f along arrow Y1, and hence the vertical support member 82 is inhibited from coming off the display screen support member 81 during rotation.

As shown in Fig. 10, a hook portion 82j is formed on a side surface of each rotational portion mounting portion 82b along arrow X2 by bending a sheet metal member. The hook portion 82j is formed with a stop portion 82k extending along arrow Y2, which is the same direction as the support shafts 82d, from the side surface (see Fig. 10) of the rotational portion mounting portion 82b along arrow X2, as shown in Fig. 12. An interval L2 between the stop portion of the hook portion 82j and the rotational portion mounting portion 82b is slightly larger than the thickness t1 of the rotational portion 81b of the display screen support member 81. Further, the hook portion 82j is provided with a stop portion 821 extending upward (along arrow Z1) on a side (along arrow Y2) opposite to the rotational portion mounting portion 82b of the stop portion 82k.

The protrusion 81e of the display screen support member 81 is formed to come into contact with the stop portion 82k when the display screen support member 81 rotates along arrow D (see Fig. 4) by a prescribed angle (about 2.5°) with respect to the vertical plane while inserting the support shaft 82d into the hole portion 81f of the display screen support member 81. The vertical support member 82 is rotated with respect to the display screen support member 81 while an outer peripheral portion of the rotational portion 81b of the display screen support member 81 is inserted into the clearance (position of the stop portion 82k (see Fig. 12)) formed between the stop portion 821 and the rotational portion mounting portion 82b. The stop portion 821 inhibits the support shaft from coming off the hole portion 81f along arrow Y1, and hence the vertical support member 82 is inhibited from coming off the display screen support member 81 during rotation.

As shown in Fig. 10, a ring-shaped protrusion 82m is formed around a substantially central portion of each support shaft 82d on the surface of the rotational portion mounting portion 82b extending along arrow Y2 (see Fig. 8). This protrusion 82m comes into contact with the surface of the rotational portion 81b of the display screen support member 81 extending along arrow Y1 when the display screen support member 81 is rotated in the anteroposterior direction (along arrows C and D in Fig. 1) with respect to the vertical plane while the support shaft 82d of the rotational portion mounting portion 82b is inserted into the hole portion 81f of the display screen support member 81, as shown in Fig. 8. Thus, the contact area between the rotational portion 81b of the display screen support member 81 and the rotational portion mounting portion 82b is reduced, and hence frictional force acting between the rotational portion 81b and the rotational portion mounting portion 82b is reduced.

The rotational gear 83 is so formed as to mesh with the rack gear 63 of the rack plate 60 from above by being arranged at a substantially central portion of the lower surface portion 81i of the display screen support member 81, as shown in Fig. 5. Further, the rack gear 63 and the rotational gear 83 are arranged on the horizontal rotation centerline (along arrows H1 and H2 in Fig. 8) of the turntable 31 and the display screen support member 81. The pair of bosses 83b inserted into the pair of boss receiving holes 81k of the display screen support member 81 are formed on an upper surface 83a of the rotational gear 83, as shown in Fig. 8. A threaded hole 83c receiving a screw 90 is formed on a substantial central portion between the pair of bosses 83a. This threaded hole 83c is so formed as to correspond to the screw receiving hole 81j of the display screen support member 81.

As shown in Fig. 8, further, a plurality of tooth tips is formed on a lower surface 83d of the rotational gear 83, to have an arcuate shape convexed downward as viewed from a side portion. Thus, the rotational gear 83 is slidable with respect to the rack gear 63 perpendicularly to the meshing direction, along arrows S and T (see Fig. 3), of the rack gear 63 and the rotational gear 83 in the horizontal plane. As shown in Fig. 5, the rotational gear 83 is fixed to the lower surface portion 81i of the display screen support member 81 with the screw 90, and hence rotation in the horizontal plane of the display screen support member 81 is transmitted to the rack gear 63 meshing with the rotating gear 83.

As shown in Figs. 4 and 5, the base portion 30 is constituted by the turntable 31 made of sheet metal mounted with the display screen support mechanism 80, a guide member 33 made of resin having a plurality of steel balls 32 arranged therein at prescribed intervals and rotatably holding the steel balls 32, a base member 34 made of sheet metal, support members (not shown) made of metal rotatably supporting the turntable 31 on the base member 34, a boss member 35 of resin rotatably receiving rotating shafts of gears 45 and 55 described later while receiving the rack plate 60 of the vertical turning/driving portion 50 to be reciprocative in the horizontal plane and a ring member 36 for preventing the rack plate 60 inserted into the boss member 35 from coming off.

The turntable 31 of the base portion 30 includes four screw mounting holes 31b provided on the upper surface 31a and a hole 31c provided at the central portion (in the vicinity of the rotation center of the turntable 31) of the upper surface 31a, as shown in Figs. 5 and 8. As shown in Fig. 3, the turntable 31 is arranged at a substantially central portion of the base member 34, and so arranged as to be rotatable in the horizontal plane. As shown in Fig. 5, a plurality of the support members (not shown) so provided on the base member 34 as to circularly enclose the turntable 31 come into surface contact with outer peripheral surfaces 31d and 33a of the turntable 31 and the guide member 33, thereby holding the turntable 31 to be rotatable in the horizontal plane.

As shown in Figs. 3 and 5, the vertical turning/driving portion 50 is constituted by a transmission gear portion 51 consisting of a plurality of gear members, a stepping motor 52 serving as the driving source for the transmission gear portion 51 and the rack plate 60 for anteroposteriorly rotating the display screen support member 81 (along arrows C and D in Fig. 1) rotatably provided on the display screen support mechanism 80 mounted on the turntable 31 of the base portion 30 with respect to the vertical plane. The stepping motor 52 is an example of the "driving source" in the present invention.

The transmission gear portion 51 is so formed that a gear 53 made of resin, a torque limiter 70 and another gear 54 made of resin are arranged in a gear box 56 made of resin while another gear 55 made of resin is arranged outside the gear box 56, as shown in Fig. 3. The gear 53 made of resin integrally includes a large-diametral gear portion 53a and a small-diametral gear portion 53b. The gears 54 and 55 made of resin also integrally include large-diametral gear portions 54a and 55a and small-diametral gear portions 54b and 55b respectively.

As shown in Figs. 3 and 5, a worm gear 57 made of resin is press-fitted into the rotating shaft of the stepping motor 52. The worm gear 57 so meshes with the large-diametral gear portion 53a of the gear 53 that the rotating shaft is perpendicular thereto. Therefore, driving force generated by the stepping motor 52 is transmitted to the gear 53 through the worm gear 57, while driving force generated by the gear 53 and the gear group subsequent thereto cannot rotate the worm gear 57 and the stepping motor 52. Thus, only the driving force generated by the stepping motor 52 is transmitted to the transmission gear portion 51 through the worm gear 57.

As shown in Fig. 3, the small-diametral gear portion 53b of the gear 53 meshes with a driving gear 72 of the torque limiter 70. A driven gear 71 of the torque limiter 70 meshes with the large-diametral gear portion 54a of the gear 54, while the small-diametral gear portion 54b of the gear 54 meshes with the large-diametral gear portion 55a of the gear 55. The small-diametral gear portion 55b of the gear 55 horizontally meshes with a gear portion 62a of a rack gear 62. Therefore, the driving force of the stepping motor 52 is transmitted to the rack plate 60 through the worm gear 57, the gear 53, the torque limiter 70, the gears 54 and 55 and the rack gear 62. The gears 53 to 55 and the worm gear 57 are examples of the "gear member" in the present invention.

As shown in Fig. 5, the rack plate 60 is constituted by a plate member 61 made of sheet metal and the rack gears 62 and 63 made of resin. The rack gear 62 is mounted on the lower surface of the plate member 61 with one screw 90. The rack gear 62 is an example of the "gear member" in the present invention.

Slots 61a and 61b extending along the longitudinal direction of the plate member 61 are formed in the vicinity of both longitudinal end portions of the plate member 61 respectively, as shown in Fig. 5, and a circular receiving hole 61c rotatably receiving a protrusion 63a of the rack gear 63 described later is formed on a substantially central portion of the plate member 61. Thus, the rack gear 63 rotates on the plate member 61 in association with rotation of the rotating gear 83 following rotation of the display screen support member 81 in the horizontal plane. The plate member 61 further has two positioning holes 61d and a screw mounting hole 61e.

The rack gear 62 is provided with the gear portion 62a as well as two bosses 62b and a screw receiving hole 62c along the longitudinal side surface extending along arrow Y1, as shown in Fig. 5. Therefore, the rack gear 62 is mounted on the plate member 61 from below by fitting the bosses 62b of the rack gear 62 into the positioning holes 61d of the plate member 61 and threading the screw 90 into the screw mounting hole 61e of the plate member 61 through the screw receiving hole 62c of the rack gear 62.

A tooth flank 63b having a plurality of tips is flatly formed on the surface of the rack gear 63 extending along arrow Z1, as shown in Fig. 5. The columnar protrusion 63a insertable into the receiving hole 61c of the plate member 61 is formed at a substantially central portion of the back surface 63c, extending along arrow Z2, of the rack gear 63. Thus, the rack gear 63 is rotatable along arrows H1 and H2 (see Fig. 3) on the plate member 61 following rotation of the rotating gear 83 in association with rotation of the display screen support member 81 in the horizontal plane, while inserting the protrusion 63a into the receiving hole 61c of the plate member 61.

Further, the rack plate 60 is so formed as to be reciprocative along arrows P and Q when the rack plate 60 is inserted into the pair of boss members 35 through the slots 61a and 61b of the plate member 61 respectively, as shown in Figs. 3 and 4. Thus, normal/reverse rotation of the stepping motor 52 is so transmitted to the rack gear 62 through the transmission gear portion 51 that the rack plate 60 is linearly reciprocative on the turntable 31 along arrows P and Q.

The horizontal turning/driving portion 40 is constituted by a transmission gear portion 41 for horizontally turning the turntable 31 provided on the base portion 30 (along arrows A and B in Fig. 1) in the horizontal plane and a stepping motor 42 serving as the driving source for the transmission gear portion 41, as shown in Figs. 3 and 5. The horizontal turning/driving portion 40 is arranged in the base portion 30, as shown in Fig. 3. The transmission gear portion 41 is so formed that a gear 43 made of resin, a torque limiter 75 and another gear 44 made of resin are arranged in a gear box 46 made of resin while another gear 45 made of resin is arranged outside the gear box 46.

A worm gear 47 made of resin is press-fitted into the rotating shaft of the stepping motor 42, as shown in Figs. 3 and 5. The gear 43 integrally includes a large-diametral gear portion 43a and a small-diametral gear portion 43b, as shown in Fig. 3. The gears 44 and 45 also integrally include large-diametral gear portions 44a and 45a and small-diametral gear portions 44b and 45b respectively. A turning gear member 48 made of resin is fixed to the upper surface 31a of the turntable 31 of the base portion 30 with four screws 90.

The worm gear 47 so meshes with the large-diametral gear portion 43a of the gear 43 that the rotating shaft is perpendicular thereto, while the small-diametral gear portion 43b of the gear 43 meshes with a driving gear 77 of the torque limiter 75. A driven gear 76 of the torque limiter 75 meshes with the large-diametral gear portion 44a of the gear 44, while the small-diametral gear portion 44b of the gear 44 meshes with the large-diametral gear portion 45a of the gear 45. The small-diametral gear portion 45b of the gear meshes with a turning gear portion 48a of the turning gear member 48. Therefore, driving force of the stepping motor 42 is transmitted to the turntable 31 through the worm gear 47, the gear 43, the torque limiter 75, the gears 44 and 45 and the turning gear member 48.

The torque limiters 70 and 75 provided in the transmission gear portions 51 and 41 are so formed as to transmit the driving force of the stepping motors 52 and 42 to the transmission gear portions 51 and 41 when the driving force of the stepping motors 52 and 42 is not more than prescribed torque and not to transmit the driving force of the stepping motors 52 and 42 to the transmission gear portions 51 and 41 when the driving force of the stepping motors 52 and 42 exceeds the prescribed torque.

The rear cabinet 14 of the display body 10 is integrally provided with a notched portion 14a for concealing the display screen support member 81, as shown in Fig. 2. A plurality of screw receiving holes 14b are provided on the outer peripheral portion of the rear cabinet 14, so that the rear cabinet 14 is mounted on the front cabinet 11 with seven screws 91.

In the display screen turning apparatus 20, a cover member 21 made of resin is mounted on the base member 34 with screws (not shown) inserted from the lower surface of the base member 34 of the base portion 30, as shown in Fig. 4. As shown in Figs. 1 and 4, another cover member 22 made of resin is mounted on the upper surface 31a of the turntable 31 with screws (not shown), to cover the base portion 30 from above and to be horizontally turnable (along arrows A and B in Fig. 1) integrally with the turntable 31 of the base portion 30. As shown in Figs. 2 and 4, the cover member 22 of resin is provided with a notched portion 22a for arranging the display screen support member 81 to be anteroposteriorly rotatable (along arrows C and D in Fig. 1).

Anteroposterior and horizontal turning operations of the display body 10 of the liquid crystal television 100 according to the embodiment of the present invention will be now described with reference to Figs. 1, 3 to 7 and 13.

When the display screen turning apparatus 20 anteroposteriorly rotates the display screen support mechanism 80 (along arrows C and D) with respect to the vertical plane as shown in Fig. 4, the display body 10 shown in Fig. 1 is rotated upward and downward. Therefore, the anteroposterior direction is hereinafter referred to as upward and downward directions.

Upward and downward rotating operations (along arrows C and D in Fig. 1) of the display body 10 of the display screen turning apparatus 20 will be now described.

The user presses an upward tilt button (not shown) of an attached remote control (not shown), thereby transmitting a signal for rotating the display body 10 (see Fig. 1) upward (along arrow C in Fig. 1) to a control circuit portion (not shown) of the display body 10. The vertical turning/driving portion 50 of the display screen turning apparatus 20 is driven on the basis of this signal. More specifically, the worm gear 57 mounted on the stepping motor 52 is rotated following the driving of the stepping motor 52 of the vertical turning/driving portion 50, while the driving gear 72 of the torque limiter 70 rotates along arrow E1 through the gear 53, as shown in Fig. 3. The driven gear 71 of the torque limiter 70 also rotates along arrow E1, while the gear 55 rotates along arrow E2 through the gear 54. Thus, the rack plate 60 moves along arrow P with the rack gear 62 horizontally meshing with the gear 55, following rotation of the gear 55 along arrow E2.

As shown in Fig. 6, the rack plate 60 so moves along arrow P that the rack gear 63 also moves along arrow S. Thus, the rotational gear 83 meshing with the rack gear 63 is rotated along arrow C while maintaining the meshing state. Consequently, the display screen support member 81 is rotated upward (along arrow C) at a prescribed rotational speed. At this time, the display screen support member 81 rotates around the upper surfaces 82f of the support shafts 82d while the base portions 81g of the sectoral hole portions 81f of the display screen support member 81 and the upper surfaces 82f of the support shafts 82d of the vertical support members 82 come into contact with each other.

According to this embodiment, the display body 10 is rotated upward while the center of gravity G of the display body 10 is located on the rearward side (along arrow C) with respect to the vertical plane 300 passing through the upper surfaces 82f of the support shafts 82d regardless of the upward rotation angle (along arrow C), as shown in Fig. 6. Therefore, the same directional load (substantially along arrow S) caused by the load W of the display body 10 always continuously acts on the meshing portion of the rack gear 63 and the rotating gear 83 (contact portion of the tooth flank 63b and the tooth flank 83e).

When rotating the display body 10 (see Fig. 1) along arrow C up to a desired angle, the user stops pressing the upward tilt button (not shown) of the attached remote control (not shown), so that the driving of the stepping motor 52 is stopped. Thus, the display screen support member 81 stops rotating along arrow C.

When the user continuously rotates the display body 10 (see Fig. 1) upward (along arrow C), first end portions of the inner side surfaces of the slots 61a and 61b of the plate member 61 come into contact with the side surfaces of the boss members 35 respectively thereby regulating movement of the rack plate 60 along arrow P, as shown in Fig. 6. Thus, the display body 10 stops rotating along arrow C. At this time, the display screen support member 81 reaches a prescribed turning angle (about 10° with respect to the vertical plane 300). This turning angle is a limit value of a rotational range along arrow C with respect to the vertical plane 300 of the display screen support member 81 supporting the display body 10.

When the display screen support member 81 is rotated along arrow C from the vertical plane 300 by about 10° as shown in Fig. 6, the notched portions 81d of the rotating portions 81b of the display screen support member 81 is not located at positions corresponding to the stop portions 82h of the hook portions 82g of the vertical support members 82 and the stop portions 82h of the hook portions 82g are unseparable from the notched portions 81d of the rotating portions 81b. In this case, the protrusions 81e of the rotational portions 81b are inhibited from movement along arrows Y1 and Y2 (see Fig. 5) by the stop portions 82k of the hooks 82j of the vertical support members 82 provided along arrows Y1 and Y2. Thus, the display screen support member 81 are kept in engagement with the pair of vertical support members 82 in the rotational range of the display screen support member 81 along arrow C.

While the stepping motor 52 (see Fig. 3) is continuously driven at this time, the driving force thereof is not transmitted to the transmission gear portion 51 by the torque limiter 70 when exceeding the prescribed torque. When the movement of the rack plate 60 along arrow P is stopped, therefore, the rotation of the gears 54 and 55 is stopped regardless of the driving of the stepping motor 52.

Then, the user presses a downward tilt button of the attached remote control, thereby transmitting a signal for rotating the display body 10 (see Fig. 1) downward (along arrow D in Fig. 1) to the control circuit portion of the display body 10 and driving the vertical turning/driving portion 50 of the display screen turning apparatus 20. Thus, the worm gear 57 mounted on the stepping motor 52 is rotated, while the driving gear 72 of the torque limiter 70 is rotated along arrow F1 through the gear 53, as shown in Fig. 3. The driven gear 71 of the torque limiter 70 is also rotated along arrow F1, while the gear 55 is rotated along arrow F2 through the gear 54. Then, the rack gear 62 and the rack plate 60 moves along arrow Q.

As shown in Fig. 7, the rack plate 60 so moves along arrow Q that the rack gear 63 also moves along arrow T. Thus, the rotational gear 83 meshing with the rack gear 63 is rotated along arrow D while maintaining the meshing state. Consequently, the display screen support member 81 is rotated downward (along arrow D) at a prescribed rotational speed. At this time, the display screen support member 81 rotates around the upper surface 82f of each support shaft 82d while the base portion 81g of each sectoral hole portion 81f thereof is in contact with the upper surface 82f of the support shaft 82d of the corresponding vertical support member 82.

According to this embodiment, the display body 10 is rotated downward while the center of gravity G of the display body 10 is located on the rearward side (along arrow C) with respect to the vertical plane 300 passing through the upper surfaces 82f of the support shafts 82d regardless of the downward rotation angle (along arrow D), as shown in Fig. 7. Therefore, the same directional load (substantially along arrow T) caused by the load W of the display body 10 continuously acts on the meshing portion of the rack gear 63 and the rotating gear 83 (contact portion of the tooth flank 63b and the tooth flank 83e).

When rotating the display body 10 (see Fig. 1) along arrow D up to a desired angle, the user stops the downward tilt button of the attached remote control, so that driving of the stepping motor 52 is stopped. Thus, the display screen support member 81 stops rotating along arrow D.

When the user continuously rotates the display body 10 (see Fig. 1) downward (along arrow d), second end portions of the inner side surfaces of the slots 61a and 61b of the plate member 61 come into contact with the side surfaces of the boss members 35 respectively thereby regulating movement of the rack plate 60 along arrow Q, as shown in Fig. 7. Thus, the display body 10 stops rotating along arrow D. At this time, the display screen support member 81 reaches a prescribed turning angle (about 2.5° with respect to the vertical plane 300). This turning angle is a limit value of a rotational range along arrow D with respect to the vertical plane 300 of the display screen support member 81 supporting the display body 10.

When display screen support member 81 is rotated along arrow D from the vertical plane 300 by about 2.5° as shown in Fig. 7, the notched portions 81d of the rotating portions 81b of the display screen support member 81 is not located at positions corresponding to the stop portions 82h of the hook portions 82g of the vertical support members 82 and the stop portions 82h of the hook portions 82g are unseparable from the notched portions 81d of the rotating portions 81b. In this case, the protrusions 81e of the rotational portions 81b are inhibited from movement along arrows Y1 and Y2 (see Fig. 5) by the stop portions 82k of the hooks 82j of the vertical support members 82 provided along arrows Y1 and Y2. Thus, the display screen support member 81 are kept in engagement with the pair of vertical support members 82 in the rotational range of the display screen support member 81 along arrow D.

While the stepping motor 52 (see Fig. 3) is continuously driven at this time, the driving force thereof is not transmitted to the transmission gear portion 51 by the torque limiter 70 when exceeding the prescribed torque. When the movement of the rack plate 60 along arrow Q is stopped, therefore, the rotation of the gears 54 and 55 is stopped regardless of the driving of the stepping motor 52.

The horizontal turning operation of the display body 10 of the display screen turning apparatus 20 in the horizontal plane will be now described.

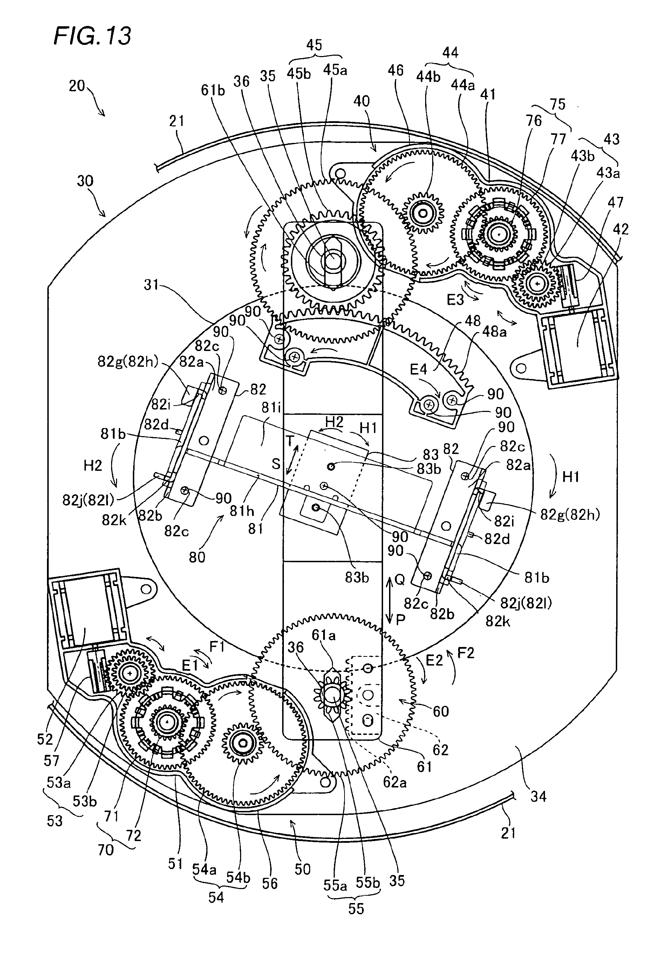

First, the user presses a horizontal turn button (not shown) of the attached remote control (not shown), thereby transmitting a signal for turning the display body 10 (see Fig. 1) leftward (along arrow A in Fig. 1) to the control circuit portion (not shown) of the display body 10 and driving the horizontal turning/driving portion 40 of the display screen turning apparatus 20. More specifically, the worm gear 47 mounted on the stepping motor 42 is rotated following the driving of the stepping motor 42 of the horizontal turning/driving portion 40 and the driving gear 77 of the torque limiter 75 rotates along arrow E3 through the gear 43, as shown in Fig. 3. The driven gear 76 of the torque limiter 75 rotates along arrow E3, and the turning gear member 48 rotates along arrow E4 through the gears 44 and 45. Thus, the turntable 31 provided on the base portion 30 mounted with the display screen support member 81 turns along arrow H1, thereby turning the display body 10 leftward (along arrow A in Fig. 1) at a prescribed rotational speed, as shown in Fig. 13. At this time, the rotating gear 83 fixed to the display screen support member 81 is also rotated along arrow H1 following the turning of the display screen support member 81. At this time, the rack gear 63 (see Fig. 4) arranged to mesh with the rotating gear 83 is also rotated following the rotation of the rotating gear 83 while maintaining the meshing state.

When turning the display body 10 (see Fig. 1) up to a desired angle, the user stops pressing the horizontal turn button of the attached remote control, so that the signal for turning the display body 10 leftward (along arrow A in Fig. 1) is not transmitted to the control circuit portion (not shown) of the display body 10 and the driving of the stepping motor 42 is stopped. Thus, the turntable 31 stops turning along arrow H1, as shown in Fig. 13.

When the turning angle of the base portion 30 reaches the maximum (about 30° in this embodiment) while the user continuously turns the display body 10 (see Fig. 1) leftward (along arrow A in Fig. 1), the turntable 31 comes into contact with a stopper member (not shown) provided in the base portion 30, to be inhibited from the leftward turning (along arrow A in Fig. 1). Therefore, the turntable 31 stops turning along arrow H1. While the stepping motor 42 (see Fig. 3) is continuously driven at this time, the driving force thereof is not transmitted to the transmission gear portion 41 by the torque limiter 75 when exceeding the prescribed torque. When the turntable 31 comes into contact with the stopper member (not shown), therefore, the rotation of the gears 44 and 45 is stopped regardless of the driving of the stepping motor 42.

While the above turning operation has been described with reference to the case of turning the turntable 31 along arrow H1 shown in Fig. 3, the horizontal turning/driving portion 40 operates similarly to the above in a turning operation for oppositely turning the turntable 31 along arrow H2. Therefore, the display body 10 (see Fig. 1) is turned rightward (along arrow B in Fig. 1) by turning the turntable 31 along arrow H2.

According to this embodiment, as hereinabove described, the center of gravity G of the display body is so formed as to be located on the rearward side with respect to the vertical plane 300 in both of the state where the display screen support member 81 is rotated on the frontward side (along arrow D) with respect to the vertical plane 300 (see Fig. 7) and the state where the display screen support member 81 is rotated on the rearward side (along arrow C) with respect to the vertical plane 300 (see Fig. 6), whereby the center of gravity G of the display body 10 always exists on the rearward side with respect to the vertical plane 300 dissimilarly to a case where the center of gravity G of the display body 10 moves between the frontward side and the rearward side holding the vertical plane 300 passing through the rotation center therebetween following rotation of the display body 10. When the display body 10 is anteroposteriorly rotated employing the vertical turning/driving portion 50, therefore, the load caused by the load W of the display body 10 applied to the meshing portions of a plurality of the gear members is always applied in the same direction in response to the rotational direction of the display body 10. In other words, the rotating gear 83 of the display screen support member 81 anteroposteriorly rotated while maintaining the state where the tooth flank 83e, to which the load caused by the load W of the display body 10 is applied, and the tooth flank 63b of the rack gear 63 mesh with each other with no clearance, and hence power can continuously transmit from the driving gear (rack gear 63) to the driven gear (rotating gear 83) in the substantially overall rotational area of the display body 10. Not only the aforementioned meshing state of the driving gear and the driven gear, namely the meshing state of the rack gear 63 and the rotating gear 83 but also the meshing state of the respective gears constituting the transmission gear portion 51 of the vertical turning/driving portion 50 starting from the stepping motor 52 provides effects similar to the above. Consequently, the display body 10 can be inhibited from jolting during rotation even when the display body 10 is anteroposteriorly rotated through the vertical turning/driving portion 50 constituted by the plurality of gears.

According to this embodiment, the center of gravity G of the display body is located on the rearward side with respect to the vertical plane 300 without crossing the vertical plane 300 passing through the rotation center (base portions 81g) of the display screen support member 81 when the display screen support member 81 is rotated on the frontward side (along arrow D) with respect to the vertical plane 300 from the state where the same is rotated on the rearward side (along arrow C) with respect to the vertical plane 300 by the vertical turning/driving portion 50 (rotational operation of the display body 10 from the state shown in Fig. 6 to the state shown in Fig. 7), whereby both of the positions P1 and P2 (see Fig. 7) of the center of gravity G of the display body 10 can easily reliably exists on the rearward side with respect to the vertical plane 300.

According to this embodiment, the center of gravity G of the display body is located on the rearward side with respect to the vertical plane 300 in both of the state where the display screen support member 81 is rotated on the frontward side (along arrow D) with respect to the vertical plane 300 by the vertical turning/driving portion 50 (see Fig. 7) and the state where the same is rotated on the rearward side (along arrow C) with respect to the vertical plane 300 (see Fig. 6), so that the same directional load caused by the load W of the display body 10 acts on the meshing portion of the plurality of gear members, whereby jolting can be easily suppressed. The rotating gear 83 is in a state where the tooth flank 83e, to which the load caused by the load W of the display body 10 is applied, meshes with the tooth flank 63b of the rack gear 63 with no clearance, even when the display body 10 stands still while being inclined with respect to the vertical plane 300, and hence the display body 10 can stably maintain the attitude inclined on the frontward side or the rearward side without jolting.

According to this embodiment, the same directional load caused by the load W of the display body 10 acts on the meshing portion of the rotating gear 83 and the rack gear 63 in both of the state where the display screen support member 81 is rotated on the frontward side (along arrow D) with respect to the vertical plane 300 by the vertical turning/driving portion 50 (see Fig. 7) and the state where the same is rotated on the rearward side (along arrow C) with respect to the vertical plane 300 (see Fig. 6), whereby the tooth flanks of the rotating gear 83 provided on the display screen support member 81 and the rack gear 63 meshing with the rotating gear 83 among the plurality of gear members always come into contact with each other, and hence the display body 10 can be further reliably rotated on the frontward side or the rearward side without jolting.

According to this embodiment, the distance from the meshing portion of the rotating gear 83 and the rack gear 63 to the rotation center axis of the display screen support member 81 is smaller than the distance from the center of gravity G of the display body 10 to the rotation center axis of the display screen support member 81, whereby the quantity of movement of the center of gravity G of the display body 10 (movement range of the center of gravity G from the position P1 to the position P2 in Fig. 7) following rotation of the display screen support member 81 can be rendered smaller than the quantity of movement of the rotating gear 83 and the rack gear 63 (movement range along arrows S and T in Fig. 7), and hence the larger quantity of movement (quantity of rotation along arrows C and D) on the display screen support member 81 side can be ensured by the smaller quantity of movement (quantity of rotation) on the gear member side.

According to this embodiment, the rack gear 63 provided on the rack plate 60 is rotated in the horizontal plane through the rotating gear 83 following the rotation of the display screen support member 81 in the horizontal plane, whereby the rack gear 63 is rotated following the rotation of the rotating gear 83 in the horizontal plane, and hence the display body 10 can be easily rotated in the anteroposterior direction with respect to the vertical plane 300 also when the display body 10 rotates in the horizontal plane.

According to this embodiment, the rotating gear 83 is fixed to the vicinity of the rotation center of the display screen support member 81 in the horizontal plane and the rack gear 63 is formed to mesh with the rotating gear 83 in the vicinity of the rotation center of the display screen support member 81 in the horizontal plane, whereby the rotating gear 83 and the rack gear 63 always mesh with each other in the vicinity of the rotation center, and hence the meshing state of the rotating gear 83 and the rack gear 63 can be easily maintained also when the display body 10 rotates in the horizontal plane.

According to this embodiment, the rotating gear 83 is convexed toward the rack gear 63 and a tooth flank thereof is formed to have the arcuate shape as viewed from the side portion (direction along arrow Y1 in Fig. 5), while the rack gear 63 in the form of a planar surface is formed to have a plurality of the tooth flanks 63b, whereby the tips of the rack gear 63 linearly moves in the horizontal plane following reciprocative movement of the rack gear 63 in the horizontal plane, and hence the rotating gear 83 meshing with the rack gear 63 rotates following linear movement of the rack gear 63. Thus, the display screen support member 81 provided with the rotating gear 83 can be easily rotated in the anteroposterior direction with respect to the vertical plane 300.

According to this embodiment, the rotation angle (up to about 10°) on the rearward side with respect to the vertical plane 300 of the display screen support member 81 is larger than the rotation angle (up to about 2.5°) on the frontward side with respect to the vertical plane 300 of the display screen support member 81, and the center of gravity G of the display body is so formed as to be located on the rearward side with respect to the vertical plane 300 in both of the state where the display screen support member 81 is rotated on the frontward side with respect to the vertical plane 300 by the vertical turning/driving portion 50 and the state where the display screen support member 81 is rotated on the rearward side with respect to the vertical plane 300, whereby the movement range (range from the position P1 to the position P2 shown in Fig. 7) of the center of gravity G of the display body 10 always exists on the rearward side where the rotational range of the display body 10 is larger, and hence the display body 10 can be smoothly rotated without jolting also when the display body 10 is rotated on the frontward side over the vertical plane 300 in addition to the substantially overall area of the rearward side where the display body 10 rotates. Consequently, the rotation angle of the display body 10 can be further precisely adjusted by the vertical turning/driving portion 50.

According to this embodiment, the display screen support member 81 is so formed as to be anteroposteriorly rotated around the base portions 81g of the sectorial hole portions 81f receiving the platelike support shafts 82d by the prescribed angle with respect to the vertical plane 300, whereby the movement range of the platelike support shafts 82d relative to the display screen support member 81 is determined by the (sectorial) shapes of the hole portions 81f, and hence the rotational range of the display screen support member 81 in the anteroposterior direction with respect to the vertical plane 300 can be easily determined.

According to this embodiment, the upper surfaces 82f in the direction perpendicular to the thickness direction of the support shafts 82d come into contact with the base portions 81g of the hole portions 81f of the display screen support member 81, so that the display screen support member 81 is anteroposteriorly rotated around the upper surfaces 82f of the support shafts 82d by the prescribed angle with respect to the vertical plane 300, whereby the load W of the display body 10 can be received by the upper surfaces 82f in the direction, where intensity is larger, perpendicular to the thickness direction of the support shafts 82d, and hence the support shafts 82d can be inhibited from deformation due to the load W of the display body 10.

According to this embodiment, the center of gravity G of the display body 10 is so formed as to be located on either the forward side or the rearward side with respect to the vertical plane 300 passing through the upper surfaces 82f of the support shafts 82d in both of the state where the display screen support member 81 is rotated on the frontward side with respect to the vertical plane 300 by the vertical turning/driving portion 50 and the state where the display screen support member 81 is rotated on the rearward side with respect to the vertical plane 300, whereby the center of gravity G of the display body 10 can easily exist on either the frontward side or the rearward side with respect to the vertical plane 300 passing through the rotation center of the display screen support member 81.

According to this embodiment, the thickness of the support shafts 82d and the width of the base portions 81g of the hole portions 81f in the thickness of the support shafts are substantially equal to each other, whereby the display screen support member 81 and the support shafts 82d can inhibit the upper surfaces 82f of the support shafts 82d from deviating from the base portions 81g of the hole portions 81f of the display screen support member 81 serving as the rotation centers when the display screen support member 81 is rotated. Therefore, the display body 10 can be smoothly rotated.

According to this embodiment, the support shafts 82d are integrally formed with the vertical support members 82 made of sheet metal by partially uprighting the vertical support members 82, whereby the support shafts 82d can be easily formed at the same time when the vertical support members 82 are formed by metal press working.

According to this embodiment, a pair of the vertical support members 82 are provided on both sides of the rotating gear 83 and rack gear 63 in the horizontal plane, whereby the load W of the display body 10 can be substantially equally supported by the pair of support shafts 82d provided on the both sides of the rotating gear 83 and rack gear 63 in the horizontal plane, and hence excessive application of the load caused by the load W of the display body 10 to the meshing portion of the rotating gear 83 and the rack gear 63 can be suppressed.

Although the present invention has been described and illustrated in detail, it is clearly understood that the same is by way of illustration and example only and is not to be taken by way of limitation, the spirit and scope of the present invention being limited only by the terms of the appended claims, as interpreted by the description and drawings.

For example, while the present invention is applied to the liquid crystal television employed as an exemplary television set (display) in the aforementioned embodiment, the present invention is not restricted to this but is also applicable to a television set having a display screen portion such as an organic EL panel other than the liquid crystal panel or a display other than the television set.

While the center of gravity G of the display body 10 is so formed as to be located on the rearward side with respect to the vertical plane 300 in both of the state where the display screen support member 81 is rotated on the frontward side and the rearward side with respect to the vertical plane 300 in the aforementioned embodiment, the present invention is not restricted to this but the center of gravity G of the display body 10 may be located on the frontward side with respect to the vertical plane 300 in both of the state where the display screen support member 81 is rotated on the frontward side and the rearward side with respect to the vertical plane 300.

While the rotation angle (about 10°) of the display screen support member 81 on the rearward side with respect to the vertical plane 300 is larger than the rotation angle (about 2.5°) of the display screen support member 81 on the frontward side with respect to the vertical plane 300 in the aforementioned embodiment, the present invention is not restricted to this but the rotation angle of the display screen support member 81 on the frontward side may be larger than the rotation angle of the display screen support member 81 on the rearward side or the rotation angles of the display screen support member 81 on the frontward and rearward sides may be substantially equal to each other.

While linear motion of the rack gear 63 following horizontal movement of the rack plate 60 is converted to rotational motion of the arcuate rotating gear 83 provided on the display screen support member 81 to rotate the display body 10 in the anteroposterior direction (vertical direction) in the aforementioned embodiment, the present invention is not restricted to this but the display body 10 may be rotated in the anteroposterior direction (vertical direction) employing a plurality of gear trains having rotating shafts and rotating with each other.

While the liquid crystal television 100 where the display body 10 is rotatably placed above the base portion is formed in the aforementioned embodiment, the present invention is not restricted to this but the present invention may be applied to a display or a television set where the display screen portion is rotatably suspended below the base portion comprising the display screen turning apparatus.

While the stepping motors 42 and 52 are provided as the driving sources of the horizontal turning/driving portion 40 and the vertical turning/driving portion 50 respectively in the aforementioned embodiment, the present invention is not restricted to this but both of the horizontal turning/driving portion and the vertical turning/driving portion may be driven by a single driving source.

## Claims

1. A display comprising:
a display screen portion (10);
a display screen support member (81) supporting said display screen portion to be rotatable in an anteroposterior direction with respect to a vertical plane (300); and
a driving source (50) rotating said display screen support member in the anteroposterior direction by a prescribed angle with respect to said vertical plane, wherein
a center of gravity of said display screen portion is located on either a frontward side or a rearward side with respect to said vertical plane in both of a state where said driving source rotates said display screen support member on said frontward side with respect to said vertical plane and a state where said driving source rotates said display screen support member on said rearward side with respect to said vertical plane.

2. The display according to claim 1, wherein
the center of gravity of said display screen portion is located on either said frontward side or said rearward side with respect to said vertical plane without crossing a vertical plane passing through a rotation center axis of said display screen support member when said driving source rotates said display screen support member on said frontward side with respect to said vertical plane from a state of rotating said display screen support member on said rearward side with respect to said vertical plane.

3. The display according to claim 1, further comprising a plurality of gear members (53, 54, 55, 57, 63, 83), wherein
the center of gravity of said display screen portion is located on either said frontward side or said rearward side with respect to said vertical plane in both of the state where said driving source rotates said display screen support member on said frontward side with respect to said vertical plane and the state where said driving source rotates said display screen support member on said rearward side with respect to said vertical plane, so that the same directional load caused by a load of said display screen portion acts on a meshing portion of said plurality of gear members.

4. The display according to claim 3, wherein
said plurality of gear members include a first gear (63) provided on said display screen support member and rotatable in the anteroposterior direction and a second gear (83) meshing with said first gear and reciprocative in a horizontal plane by normal or reverse rotation of said driving source, and
the same directional load caused by the load of said display screen portion acts on a meshing portion of said first gear and said second gear in both of the state where said driving source rotates said display screen support member on said frontward side with respect to said vertical plane and the state where said driving source rotates said display screen support member on said rearward side with respect to said vertical plane.

5. The display according to claim 4, wherein
a distance from said meshing portion of said first gear and said second gear to a rotation center axis of said display screen support member is rendered smaller than a distance from the center of gravity of said display screen portion to said rotation center axis of said display screen support member.

6. The display according to claim 4, wherein
said display screen support member is formed to be rotatable in the horizontal plane, and
said second gear is formed to be rotated in the horizontal plane through said first gear following rotation of said display screen support member in the horizontal plane.

7. The display according to claim 6, wherein
said first gear is fixed to the vicinity of a rotation center of the said display screen support member in the horizontal plane, and said second gear meshes with said first gear in the vicinity of said rotation center of said display screen support member in the horizontal plane.

8. The display according to claim 4, wherein
said first gear is convexed toward said second gear and has tooth tips formed to have an arcuate shape as viewed from a side portion, while said second gear is a rack gear in the form of a planar surface, having a plurality of teeth.

9. The display according to claim 1, wherein
a rearward rotation angle of said display screen support member with respect to said vertical plane is larger than a frontward rotation angle of said display screen support member with respect to said vertical plane, and the center of gravity of said display screen portion is located on said rearward side with respect to said vertical plane in both of the state where said driving source rotates said display screen support member on said frontward side with respect to said vertical plane and the state where said driving source rotates said display screen support member on said rearward side with respect to said vertical plane.

10. The display according to claim 1, further comprising a platelike support shaft (82d), wherein
said display screen support member includes a rotating portion (81b) provided with a sectorial hole portion (81f) receiving said platelike support shaft, and
said display screen support member is rotated around a base portion (81g) of said sectorial hole portion receiving said platelike support shaft in the anteroposterior direction by a prescribed angle with respect to said vertical plane.

11. The display according to claim 10, wherein
an end surface (82d) in a direction perpendicular to a thickness direction of said platelike support shaft comes into contact with a base portion of said hole portion of said display screen support member, so that said display screen support member is rotated around said end surface of said platelike support shaft in the anteroposterior direction by the prescribed angle with respect to said vertical plane.

12. The display according to claim 11, wherein
the center of gravity of said display screen portion is located on either said frontward side or said rearward side with respect to a vertical plane passing through said end surface of said platelike support shaft in both of the state where said driving source rotates said display screen support member on said frontward side with respect to said vertical plane and the state where said driving source rotates said display screen support member on said rearward side with respect to said vertical plane.

13. The display according to claim 11, wherein
a thickness of said platelike support shaft and a width of said base portion of said sectorial hole portion in the thickness direction of said support shaft are equal to each other.

14. The display according to claim 10, further comprising a vertical support member (82) provided with said platelike support shaft, wherein
said vertical support member is made of sheet metal, and said platelike support shaft is integrally formed with said vertical support member by partially uprighting said vertical support member.

15. The display according to claim 10, further comprising:
a plurality of gear members including a first gear provided on said display screen support member and rotatable in the anteroposterior direction and a second gear meshing with said first gear and reciprocative in a horizontal plane by normal or reverse rotation of said driving source; and
a vertical support member provided with a platelike support shaft, wherein a pair of said vertical support members are provided on both sides of said first gear and said second gear in the horizontal plane.
